# EUROPÄISCHE PATENTSCHRIFT

(11) **EP 3 063 381 B1**
(45) Veröffentlichungstag und Bekanntmachung des Hinweises auf die Patenterteilung: **24.04.2019**
(21) Anmeldenummer: 14790512.9
(22) Anmeldetag: 23.10.2014
(51) Int. Cl.: F01M 13/00, F01M 13/02, F01M 13/04

(54) **STEUERBARE ÖLABSCHEIDEEINRICHTUNG**
CONTROLLABLE OIL SEPARATION DEVICE
DISPOSITIF DE SÉPARATION D'HUILE RÉGLABLE

(30) Priorität: 30.10.2013 DE 102013111955
(43) Veröffentlichungstag der Anmeldung: 07.09.2016
(73) Patentinhaber: ThyssenKrupp Presta TecCenter AG, 9492 Eschen (LI)
(72) Erfinder: MÜLLER, Ulf, 09116 Chemnitz (DE)
(74) Vertreter: thyssenkrupp Intellectual Property GmbH
(86) Internationale Anmeldenummer: PCT/EP2014/002865
(87) Internationale Veröffentlichungsnummer: WO 2015/062711

(56) Entgegenhaltungen:
- EP-A1- 0 566 826
- EP-A1- 2 609 979
- WO-A2-2011/143464
- DE-B3-102008 028 543
- GB-A- 1 263 503

## Beschreibung

Die vorliegende Erfindung betrifft eine Ölabscheideeinrichtung zur Abscheidung von Öl aus einem Gasstrom zur Entlüftung eines Kurbelgehäuses einer Brennkraftmaschine, mit einer Anströmseite, die mit dem Kurbelgehäuse der Brennkraftmaschine strömungsmäßig in Verbindung bringbar ist und aus der die Ölabscheideeinrichtung mit dem mit Öl beladenen Gasstrom anströmbar ist und mit einer Abströmseite, die mit dem Ansaugtrakt der Brennkraftmaschine strömungsmäßig in Verbindung bringbar ist und in den der von Öl im Wesentlichen gereinigte Gasstrom aus der Ölabscheideeinrichtung abströmbar ist.

### STAND DER TECHNIK

Bei nicht schaltbaren Ölabscheideeinrichtungen zur Abscheidung von Öl aus einem Gasstrom zur Entlüftung eines Kurbelgehäuses einer Brennkraftmaschine, dem sogenannten Blow-By-Gasstrom, ist die zur Ölabscheidung relevante Strömungsgeometrie meist nicht veränderlich über dem anliegenden Volumenstrom an Blow-By-Gas. Dadurch wirkt die Ölabscheideeinrichtung bei geringen Volumenströmen hinsichtlich der erreichbaren Abscheideleistung relativ schlecht, bei hohen Volumenströmen des Blow-By-Gases hingegen wirkt die Ölabscheideeinrichtung zwar verbessert, in der Ölabscheideeinrichtung wird jedoch aufgrund der festen Geometrie des mit dem Gasstrom durchströmten Strömungspfades ein quadratischer Anstieg des Druckverlustes mit dem Volumenstrom erzeugt.

Bei sogenannten schaltbaren Ölabscheideeinrichtungen wird über ein meist federbelastetes Element mit einem zunehmenden Volumenstrom an Blow-By-Gas ein größerer Strömungsquerschnitt zur Durchströmung des Gasstromes freigegeben. Damit wird der Abscheidegrad über einem größeren Bereich an Volumenstrom des Blow-By-Gases relativ konstant gehalten. Der Druckverlust über dem gesamten System nimmt jedoch zu.

In Motorlastpunkten, bei denen ein großer Unterdruck im Ansaugtrakt, insbesondere bei turboaufgeladenen Motoren, vorhanden ist, dient ein der Ölabscheideeinrichtung strömungsseitig nachgeschaltetes Druckregelventil dazu, den Unterdruck im Kurbelgehäuse der Brennkraftmaschine nach unten hin zu begrenzen. Beispielsweise kann vor dem Turbolader einer Brennkraftmaschine bis zu 60 mbar beziehungsweise im Saugrohr bis zu 300 mbar Unterdruck vorherrschen. Die Begrenzung des Unterdruckes durch das Druckregelventil kann beispielsweise auf bis zu 30 mbar bis 50 mbar betragen. Diese Druckregelung erfolgt, indem der Strömungswiderstand am Druckregelventil erhöht wird, wodurch sich eine weitere Verringerung des Strömungsquerschnittes ergibt, allerdings erfolgt dies ohne dabei die Abscheideleistung zu verbessern. Die zur Verfügung stehende Strömungsenergie wird dadurch nicht zur Abscheidung genutzt, da das Druckregelventil in der Regel bereits mit dem gereinigten Gasstrom durchströmt wird.

Beispielsweise zeigt die DE 10 2004 006 082 A1 eine Zyklon- Ölabscheideeinrichtung, bei der mehrere Zyklone parallel angeordnet sind. Abhängig von der durch einen ersten Zyklon hervorgerufenen Druckdifferenz zwischen dem zugeführten mit Öl beladenen Gasstrom und dem gereinigten Gasstrom geben Klappenventile den Strömungsweg durch weitere, nachfolgende Zyklone hindurch frei. Das Energiepotenzial, was sich ergeben könnte, um die Abscheideleistung weiter zu erhöhen, bleibt dabei jedoch ungenutzt.

Eine weitere Ölabscheideeinrichtung zeigt die DE 102 05 981 A1, die mit schaltbaren Zyklonen ausgebildet ist, und es ist ein Schieber vorgesehen, mit denen Öffnungen der Zyklone geöffnet oder geschlossen werden können. Im Schieber sind hierzu verschiedene Aussparungen vorgesehen, die jeweils eine unterschiedliche Größe aufweisen. Wird durch eine größere Menge an Gasvolumenstrom der Schieber weiter in eine Öffnungsrichtung verlagert, öffnen sich die Anströmöffnungen der einzelnen Zyklone derart, dass die Strömungsquerschnitte in die Zyklone zunehmen. Nimmt der Volumenstrom des mit Öl beladenen Gases wieder ab, so schließen sich die einzelnen Strömungsquerschnitte der Zyklone wieder, jedoch wird auch mit diesem System nicht erreicht, dass die zur Drosselung genutzte Strömungsenergie zur Verbesserung der Abscheideleistung genutzt werden kann.

Weitere Ölabscheideeinrichtungen sind aus der EP 2 609 979 A1 und WO 2011/143464 A2 bekannt geworden.

### OFFENBARUNG DER ERFINDUNG

Aufgabe der Erfindung ist die Weiterbildung einer Ölabscheideeinrichtung zur Abscheidung von Öl aus einem Gasstrom zur Entlüftung eines Kurbelgehäuses einer Brennkraftmaschine, mit der die Nachteile des Standes der Technik überwunden werden können, insbesondere soll eine Ölabscheideeinrichtung bereitgestellt werden, die eine Regelung des Druckes im Kurbelgehäuse ermöglicht und abhängig von der Drehzahl und dem Lastpunkt der Brennkraftmaschine über einen weiten Betriebsbereich einen optimalen Abscheide-Wirkungsquerschnitt aufweist.

Diese Aufgabe wird ausgehend von einer Ölabscheideeinrichtung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass ein erstes Steuerorgan vorgesehen ist, mit dem ein erster Strömungsquerschnitt des Gasstroms durch die Ölabscheideeinrichtung veränderbar ist und das durch einen Gasdruck im Kurbelgehäuse steuerbar ist und dass ein zweites Steuerorgan vorgesehen ist, mit dem ein dem ersten Strömungsquerschnitt nachgelagerter zweiter Strömungsquerschnitt des Gasstroms durch die Ölabscheideeinrichtung veränderbar ist und das durch einen Unterdruck im Ansaugtrakt steuerbar ist.

Mit der erfindungsgemäßen Ölabscheideeinrichtung wird die Möglichkeit geschaffen, den Strömungsquerschnitt in der Ölabscheideeinrichtung zur Hindurchführung des mit Öl beladenen Gasstroms, einerseits in Abhängigkeit des Gasdrucks im Kurbelgehäuse und andererseits in Abhängigkeit des Unterdrucks im Ansaugtrakt, zu steuern. Damit wird das Ziel erreicht, auch das Energiepotenzial zur Druckregelung des Gasdruckes im Kurbelgehäuse zur Verbesserung der Abscheideleistung zu nutzen, und die Nutzung des Energiepotenzials erfolgt im Wesentlichen in jedem Arbeitspunkt der Brennkraftmaschine auf optimale Weise. Im Ergebnis kann damit der Wirkungsgrad der Ölabscheideeinrichtung verbessert werden.

Durch die getrennte Steuerung eines ersten Strömungsquerschnittes des Gasstroms durch die Ölabscheideeinrichtung über den Gasdruck im Kurbelgehäuse und eines zweiten Strömungsquerschnittes des Gasstroms durch die Ölabscheideeinrichtung durch den Unterdruck im Ansaugtrakt kann die Ölabscheidung bei gleichbleibender Drehzahl der Brennkraftmaschine lastabhängig erfolgen, auf gleiche Weise kann die Ölabscheidung bei gleichbleibender Last der Brennkraftmaschine drehzahlabhängig erfolgen, und für jeden Betriebspunkt der Brennkraftmaschine können die abscheiderelevanten Strömungsquerschnitte in der Ölabscheideeinrichtung derart optimiert eingestellt werden, dass eine maximale Abscheideleistung erzielt werden kann.

In Lastpunkten hoher Last und hoher Drehzahl liegt ein großer Unterdruck im Ansaugtrakt der Brennkraftmaschine vor, beispielsweise wenn der Turbolader in vollem Betrieb arbeitet, und eine optimierte Ölabscheidung erfolgt durch eine Verringerung der abscheidungsrelevanten Strömungsquerschnitte infolge des angestiegenen Unterdrucks im Ansaugtrakt. Damit steigt die Strömungsgeschwindigkeit durch die abscheidungsrelevanten Strömungsquerschnitte an und die Abscheideleistung wird verbessert. Gleichzeitig steigt durch die engeren Querschnitte der Strömungswiderstand über das Abscheidesystem, ähnlich der Funktion bekannter Druckregelventile, jedoch unter gleichzeitiger Nutzung der Strömungsenergie für die Funktion der Ölabscheidung.

Zur Bildung der Ölabscheideeinrichtung ist ein Grundkörper vorgesehen, in dem Strömungsöffnungen zur Hindurchleitung des Gasstroms eingebracht sind. Weiterhin kann ein Abscheidekörper vorgesehen und so angeordnet sein, dass dieser mit dem durch die Strömungsöffnungen gelangten Gasstrom anströmbar ist. Eine hohe Abscheideleistung des Öls aus dem Gasstrom erfolgt insbesondere dann, wenn der Gasstrom durch eine Querschnittsverengung der Strömungsöffnungen erfolgt und der Gasstrom beim Durchtritt durch die Strömungsöffnungen beschleunigt wird. Der beschleunigte Gasstrom gelangt dabei mit dem mitgeführten Öl, beispielsweise in Tröpfchenform, gegen den Abscheidekörper, wodurch schließlich die Abscheidung des Öls aus dem Gasstrom erfolgt. Durch die getrennte Steuerung des ersten und des zweiten Strömungsquerschnittes in Abhängigkeit vom Gasdruck im Kurbelgehäuse und unabhängig davon vom Unterdruck im Ansaugtrakt kann für eine Vielzahl von Betriebspunkten der Brennkraftmaschine mit verschiedenen Drehmomenten und mit verschiedenen Drehzahlen eine Querschnittsverengung im Strömungspfad der Ölabscheideeinrichtung eine starke Beschleunigung der Gasströmung gegen den Abscheidekörper erfolgen. Der Abscheidekörper kann beispielsweise aus einem Vliesmaterial oder Ähnlichem bestehen.

Das erste Steuerorgan kann angrenzend an den Grundkörper angeordnet sein und Steueröffnungen aufweisen, durch die der Gasstrom hindurchführbar ist. Das erste Steuerorgan ist dabei relativ zum Grundkörper bewegbar, derart, dass zur Änderung des ersten Strömungsquerschnittes die Überdeckung der Steueröffnungen mit den Strömungsöffnungen im Grundkörper veränderbar ist.

Das zweite Steuerorgan ist gegenüberliegend zum ersten Steuerorgan ebenfalls angrenzend an den Grundkörper angeordnet, beispielsweise an einer gegenüberliegenden Seite einer Wandung des Grundkörpers, in dem die Strömungsöffnungen eingebracht sind. Das zweite Steuerorgan weist ebenfalls Steueröffnungen auf, durch die der Gasstrom hindurchführbar ist, beispielsweise nachfolgend durch die Hindurchführung der Steueröffnungen im ersten Steuerorgan. Dabei ist das zweite Steuerorgan ebenfalls relativ zum Grundkörper bewegbar ausgeführt, sodass zur Änderung des zweiten Strömungsquerschnittes die Überdeckung der Steueröffnungen mit den Strömungsöffnungen im Grundkörper veränderbar ist. Durch die getrennte Beweglichkeit des ersten und des zweiten Steuerorgans, jeweils angrenzend an den Grundkörper, können die ersten und zweiten Strömungsquerschnitte ebenfalls unabhängig voneinander verändert werden.

Wenigstens ein Teil des Strömungspfades des Gasstroms durch die Ölabscheideeinrichtung wird damit gebildet durch die Steueröffnungen im ersten Steuerorgan, durch die Strömungsöffnungen im Grundkörper und durch die sich anschließenden weiteren Steueröffnungen im zweiten Steuerorgan, die sich an die Strömungsöffnungen im Grundkörper anschließen. Durch die teilweise Überdeckung der Steueröffnungen gegen die Strömungsöffnungen im Grundkörper wird ein System von Doppelschiebern gebildet, und nur in einem Lastpunkt, in dem bei einem hohen Drehmoment und einer niedrigen Drehzahl ein großer Strömungsquerschnitt erforderlich ist, können die Steueröffnungen in den Steuerorganen mit den Strömungsöffnungen im Grundkörper eine volle Überdeckung aufweisen, um aufgrund des großen Volumenstroms bei einemr großen Drehmoment und einem geringen Unterdruck im Ansaugtrakt der Brennkraftmaschine aufgrund der niedrigen Drehzahl einen großen Strömungsquerschnitt zu bilden. Der große Strömungsquerschnitt ist erforderlich, da nur ein geringer Sogeffekt durch den Unterdruck im Ansaugtrakt vorherrscht.

Eine hohe Leistung der Brennkraftmaschine bei niedrigen Drehzahlen ist dadurch gekennzeichnet, dass ein hohes Drehmoment bereitgestellt wird, und ein hohes Drehmoment erzeugt eine verstärkte Bildung von Blow-By-Gasen.

Gemäß einer vorteilhaften Weiterführung der erfindungsgemäßen Ölabscheideeinrichtung kann ein erstes Federelement vorgesehen sein, durch das das erste Steuerorgan vorgespannt ist, wobei das erste Steuerorgan eine Wirkfläche aufweist, die mit dem Gasdruck im Kurbelgehäuse beaufschlagbar ist, wobei mit einem Gasdruck auf die Wirkfläche eine Kraft gegen die Vorspannkraft des ersten Federelementes erzeugbar ist. Weiterhin kann ein zweites Federelement vorgesehen sein, durch das das zweite Steuerorgan vorgespannt ist, wobei das zweite Steuerorgan mit einer Membran wirkverbunden ist, die mit dem Unterdruck im Ansaugtrakt zusammenwirkt, wobei mit einem Unterdruck an der Membran eine Kraft gegen die Vorspannkraft des zweiten Federelementes erzeugbar ist. Die Membran kann eine Außenseite aufweisen, die mit Umgebungsluft beaufschlagbar ist, wobei die Außenseite der Seite der Membran gegenüberliegt, die einen Raum mit dem Unterdruck im Ansaugtrakt begrenzt.

Der Grundkörper, das erste Steuerorgan, das zweite Steuerorgan und/oder der Abscheidekörper können hohlzylinderförmig ausgebildet sein und sich ineinander gefügt um eine gemeinsame Mittelachse erstrecken. Das erste Steuerorgan kann gegen die Innenwand des Grundkörpers entlang der Mittelachse geführt sein, und das zweite Steuerorgan kann auf der Außenumfangsfläche des Grundkörpers entlang der Mittelachse geführt sein. Damit können die beiden Steuerorgane gegen den Grundkörper geführt werden, ohne dass die Führung des ersten Steuerorgans durch die Führung des zweiten Steuerorgans beeinflusst ist.

Schließlich kann ein vorzugsweise hohlzylinderförmig ausgebildetes Gehäuse vorgesehen sein, in dem der Grundkörper, das erste Steuerorgan, das zweite Steuerorgan und/oder der Abscheidekörper aufgenommen sind, wobei insbesondere an einer Endseite des Gehäuses die Membran dichtend angeordnet ist. Damit entsteht eine kompakte, klein bauende, etwa zylinderförmig oder topfförmig ausgebildete Ölabscheideeinrichtung, die axial von der Innenseite anströmbar ist, und der Gasstrom kann in Form eines Mantelstroms den mittigen Anströmbereich umströmen und ringförmig aus der Ölabscheideeinrichtung wieder herausgeführt werden. Dadurch kann die Abströmseite die Anströmseite mantelförmig umschließen.

### BEVORZUGTES AUSFÜHRUNGSBEISPIEL

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht eines Ausführungsbeispiels einer Ölabscheideeinrichtung zur Abscheidung von Öl aus einem Gasstrom zur Entlüftung eines Kurbelgehäuses einer Brennkraftmaschine, wobei sich die Brennkraftmaschine in einem Betriebszustand mit einem niedrigen Drehmoment und einer niedrigen Drehzahl befindet,
- Figur 2: die Querschnittsansicht des Ausführungsbeispiels einer Ölabscheideeinrichtung, wobei sich die Brennkraftmaschine in einem Betriebszustand mit einem hohen Drehmoment und einer niedrigen Drehzahl befindet,
- Figur 3: die Querschnittsansicht des Ausführungsbeispiels einer Ölabscheideeinrichtung, wobei sich die Brennkraftmaschine in einem Betriebszustand mit einem hohen Drehmoment und einer hohen Drehzahl befindet,
- Figur 4a: die Querschnittsansicht eines Ausführungsbeispiels einer Ölabscheideeinrichtung mit zwei Abscheidekörpern in einem ersten Zustand,
- Figur 4b: die Querschnittsansicht des in der Figur 4a gezeigten Ausführungsbeispiels einer Ölabscheideeinrichtung mit zwei Abscheidekörpern in einem zweiten Zustand, und
- Figur 4c: die Querschnittsansicht des in den Figuren 4a und 4b gezeigten Ausführungsbeispiels einer Ölabscheideeinrichtung mit zwei Abscheidekörpern in einem dritten Zustand.

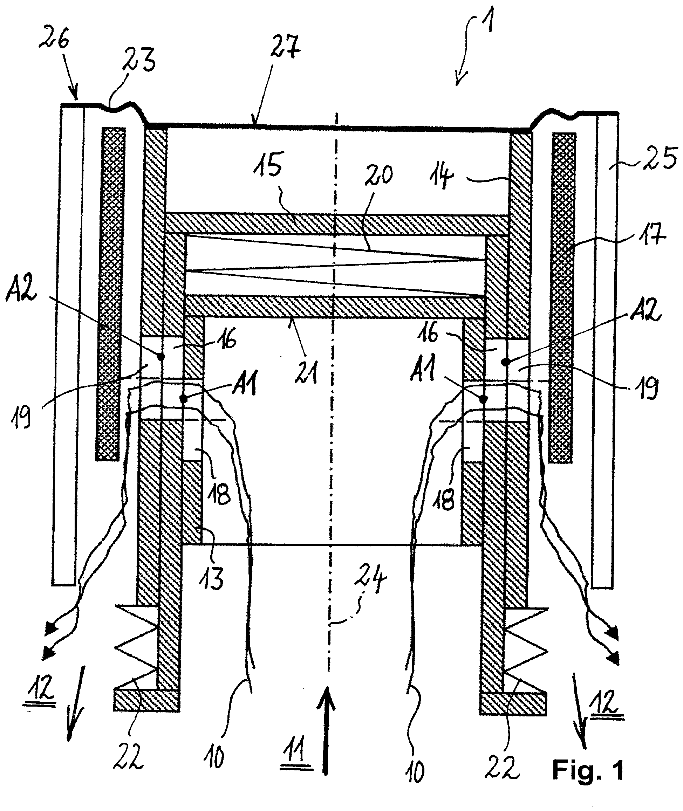

Merkmale mit gleicher technischer Funktion und Wirkungsweise sind in den Figuren 1 bis 4c mit demselben Bezugszeichen versehen.

In den Figuren 1 bis 4c ist jeweils ein Ausführungsbeispiel einer Ölabscheideeinrichtung 1 gezeigt, wobei sich die Ölabscheideeinrichtung 1 in verschiedenen Betriebszuständen befindet, die mit verschiedenen Betriebspunkten der Brennkraftmaschine korrespondieren. Der Aufbau der Ölabscheideeinrichtung 1 gemäß der Darstellung in den Figuren 1 bis 4c wird daher zunächst unabhängig vom Betriebszustand beschrieben.

Die Ölabscheideeinrichtung 1 dient zur Abscheidung von Öl aus einem Gasstrom 10 zur Entlüftung eines Kurbelgehäuses einer Brennkraftmaschine. Hierzu weist die Ölabscheideeinrichtung 1 eine Anströmseite 11 auf, die in strömungsmäßiger Verbindung mit dem Kurbelgehäuse der Brennkraftmaschine bringbar ist. Weiterhin weist die Ölabscheideeinrichtung 1 eine Abströmseite 12 auf, die mit einem Ansaugtrakt der Brennkraftmaschine in Verbindung bringbar ist.

Die Ölabscheideeinrichtung 1 weist ein Gehäuse 25 auf, das etwa hohlzylinderförmig ausgeführt ist und sich um eine Mittelachse 24 erstreckt. Im Gehäuse 25 ist ein Abscheidekörper 17 angeordnet, der rohrförmig ausgebildet ist und sich konzentrisch zur Innenwand des Gehäuses 25 ebenfalls um die Mittelachse 24 erstreckt. Der Abscheidekörper 17 kann beispielsweise aus einem Vliesmaterial gebildet sein und weist einen so großen Durchmesser auf, dass sich dieser mit nur geringem Abstand zur Innenwand des Gehäuses 25 in diesem aufgenommen befindet.

Wie in den Figuren 1, 2 und 3 gezeigt, befindet sich innenseitig im Abscheidekörper 17 ein Grundkörper 15, wobei die Anströmseite 11 der Ölabscheideeinrichtung 1 innerhalb des Grundkörpers 15 und die Abströmseite 12 der Ölabscheideeinrichtung 1 außerhalb des Grundkörpers 15 im radial umlaufenden Spalt zwischen dem Grundkörper 15 und der Innenseite des Gehäuses 25 ausgebildet ist.

Im Grundkörper 15, der einen Boden aufweist und somit topfförmig ausgeführt ist, sind auf dem Umfang verteilt um die Mittelachse 24 mehrere Strömungsöffnungen 16 eingebracht, durch die der Gasstrom 10 von der Innenseite des Grundkörpers 15 zur Außenseite des Grundkörpers 15 strömen kann. Der Abscheidekörper 17 umschließt dabei den Grundkörper 15 wenigstens in der Höhe der in den Grundkörper 15 eingebrachten Strömungsöffnungen 16, sodass der mit Öl beladene Gasstrom 10 aus dem Kurbelgehäuse der Brennkraftmaschine durch die Strömungsöffnungen 16 im Grundkörper 15 von innen nach außen hindurchströmt und so gegen die Innenseite des Abscheidekörpers 17 gelangt. Durch die innenseitige Anströmung des Abscheidekörpers 17 können die mit dem Gasstrom 10 mitgeführten Öltröpfchen oder der mitgeführte Ölnebel am Abscheidekörper 17 abgeschieden werden. Insbesondere wird beim Auftreffen des Gasstroms 10 auf die Innenseite des Abscheidekörpers 17 der Gasstrom 10 umgelenkt, um zur Abströmseite 12 zu gelangen. Bei dieser Umlenkung gelangen die massebehafteten Öltröpfchen gegen die Innenseite des Abscheidekörpers 17 und bleiben an diesem haften.

Innenseitig im Grundkörper 15 ist ein erstes Steuerorgan 13 aufgenommen, das ebenfalls topfförmig ausgeführt ist und das erste Steuerorgan 13 ist über die Innenseite des Grundkörpers 15 entlang der Mittelachse 24 verschiebbar geführt. Im ersten Steuerorgan 13 befinden sich korrespondierend zu den Strömungsöffnungen 16 im Grundkörper 15 ebenfalls mehrere Steueröffnungen 18 und abhängig von der Position des ersten Steuerorgans 13 kann die Überdeckung der Steueröffnungen 18 mit den Strömungsöffnungen 16 verändert werden, wodurch ein veränderlicher erster Strömungsquerschnitt A1 im Strömungspfad des Gasstroms 10 gebildet wird.

Durch die innenseitige Aufnahme des ersten Steuerorgans 13 im Grundkörper 15 wird das topfförmig ausgebildete, geschlossene erste Steuerorgan 13 mit dem Gasdruck beaufschlagt, der im Kurbelgehäuse der Brennkraftmaschine vorherrscht. Die Druckbeaufschlagung des ersten Steuerorgans 13 erfolgt durch die Anordnung des ersten Steuerorgans 13 auf der Anströmseite 11, sodass der Gasstrom 10 in das topfförmige, erste Steuerorgan 13 einströmt. Auf der Außenseite des ersten Steuerorgans 13 befindet sich zwischen dem Topfboden des Grundkörpers 15 und dem Topfboden des ersten Steuerorgans 13 ein erstes Federelement 20, durch das das erste Steuerorgan 13 vorgespannt ist, wobei der Topfboden des ersten Steuerorgans 13 eine Wirkfläche 21 bildet, die mit dem Gasdruck im Kurbelgehäuse beaufschlagbar ist, und wobei mit dem Gasdruck auf die Wirkfläche 21 eine Kraft gegen die Vorspannkraft des ersten Federelements 20 erzeugbar ist.

Steigt der Gasdruck gegen die Wirkfläche 21, so wird das erste Federelement 20 zusammengedrückt und das erste Steuerorgan 13 wandert entlang der Mittelachse 24 tiefer in den topfförmigen Grundkörper 15 hinein, wodurch der erste Strömungsquerschnitt A1 zwischen den Strömungsöffnungen 16 und den Steueröffnungen 18 vergrößert wird. Verkleinert sich der Gasdruck im Kurbelgehäuse wieder, so entspannt das erste Federelement 20 und das erste Steuerorgan 13 wird entlang der Mittelachse 24 wieder aus dem topfförmigen Grundkörper 15 herausgeführt, wodurch sich der erste Strömungsquerschnitt A1 wieder verkleinert.

Auf der Außenumfangsfläche des Grundkörpers 15 ist ein zweites Steuerorgan 14 aufgenommen, und auch das zweite Steuerorgan 14 ist in Richtung der Mittelachse 24 auf der Außenseite des Grundkörpers 15 hubbeweglich geführt. Das zweite Steuerorgan 14 ist mit einem zweiten Federelement 22 vorgespannt, und es ist eine Membran 23 vorgesehen, die einen radial umlaufenden Spalt zwischen dem Gehäuse 25 und dem zweiten Steuerorgan 14 beweglich verschließt, indem der äußere Teil der Membran 23 mit einer umlaufenden Endseite 26 des Gehäuses 25 abschließt. Durch die Membran 23 wird der radiale Spalt zwischen dem zweiten Steuerorgan 14 und der Innenseite des Gehäuses 25 einseitig verschlossen, sodass die Abströmseite 12, die mit dem umlaufenden radial sich erstreckenden Raum zwischen dem Gehäuse 25 und dem zweiten Steuerorgan 14 gebildet ist, strömungsmäßig in Kontakt steht. Vergrößert sich in Abhängigkeit der Drehzahl der Brennkraftmaschine der Unterdruck im Ansaugtrakt der Brennkraftmaschine, so fährt das zweite Steuerorgan 14 weiter auf den Grundkörper 15 auf. Schwächt der Unterdruck im Ansaugtrakt der Brennkraftmaschine wieder ab, so führt das zweite Federelement 22 das zweite Steuerorgan 14 wieder zurück. Die Rückführung des zweiten Steuerorgans 14 erfolgt gegen einen Umgebungsdruck, der auf eine Außenseite 27 der Membran 23 wirkt.

Im zweiten Steuerorgan 14 befinden sich Steueröffnungen 19, die mit den Strömungsöffnungen 16 im Grundkörper 15 korrespondieren. In Abhängigkeit von der Hublage des zweiten Steuerorgans 14 entlang der Mittelachse 24 kann die Überdeckung der Steueröffnungen 19 mit den Strömungsöffnungen 16 verändert werden, wodurch ein zweiter veränderlicher Strömungsquerschnitt A2 gebildet wird. Entlang des Strömungspfades des Gasstromes 10 folgt damit auf den ersten Strömungsquerschnitt A1 der zweite Strömungsquerschnitt A2, die jeweils unabhängig voneinander veränderlich sind, sodass die Gasströmung gegen die Innenseite des Abscheidekörpers 17 in Abhängigkeit des Gasdruckes im Kurbelgehäuse der Brennkraftmaschine einerseits und in Abhängigkeit vom Unterdruck im Ansaugtrakt der Brennkraftmaschine andererseits beeinflusst werden kann.

Figur 1 zeigt die Ölabscheideeinrichtung 1 in einem ersten Betriebszustand bei einem niedrigen Volumenstrom an Blow-By-Gasen, die im Kurbelgehäuse der Brennkraftmaschine gebildet werden. Die Brennkraftmaschine weist dabei zugleich eine niedrige Drehzahl auf. Durch die geringere Menge an Blow-By-Gasen, die im Kurbelgehäuse entstehen, ist der Gasdruck im Kurbelgehäuse geringer, sodass die resultierende Kraft durch den Gasdruck auf die Wirkfläche 21 des ersten Steuerorgans 13 gering ist, und das erste Federelement 20 führt das erste Steuerorgan 13 gegen die Anströmseite 11 aus dem Grundkörper 15 heraus. Dadurch verkleinert sich der erste Strömungsquerschnitt A1. Die Folge ist, dass bei einem geringeren Volumenstrom des Gasstroms 10 durch geringere entstehende Menge an Blow-By-Gas dennoch eine ausreichend hohe Geschwindigkeit des Gasstroms 10 durch die Öffnungen 18, 16, 19 erzeugt wird, sodass eine effektive Ölabscheidung an der Innenseite des Abscheidekörpers 17 ermöglicht wird.

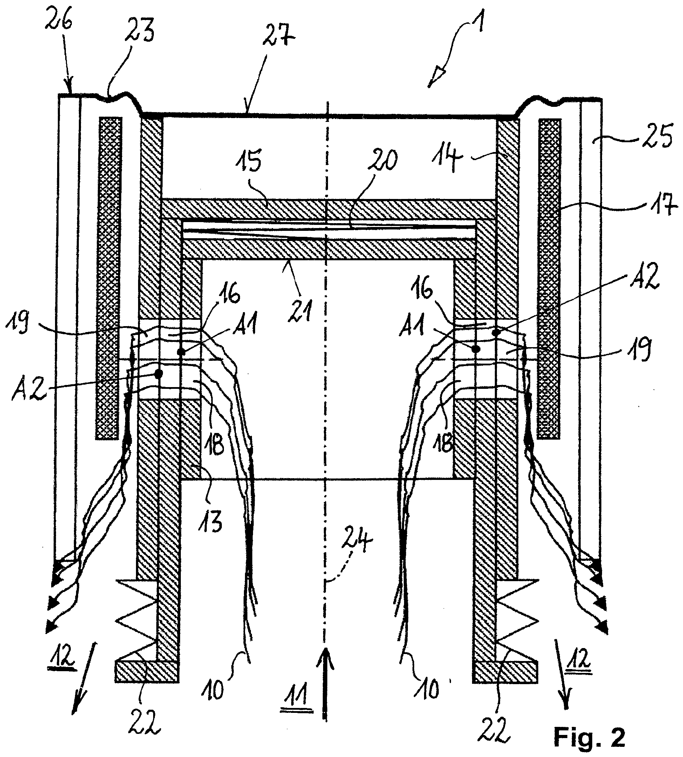

Figur 2 zeigt einen Betriebszustand der Ölabscheideeinrichtung 1 korrespondierend zu einem Betriebspunkt der Brennkraftmaschine, die mit einer hohen Leistung, jedoch bei geringer Drehzahl betrieben wird. Durch die hohe Leistung, hervorgerufen durch ein hohes Drehmoment der Brennkraftmaschine, entsteht eine größere Menge an Blow-By-Gasen, sodass der größere Gasdruck im Kurbelgehäuse das erste Steuerorgan 13 durch die Druckbeaufschlagung der Wirkfläche 21 in den Grundkörper 15 unter gleichzeitiger Komprimierung des ersten Federelements 20 hineindrückt. Dadurch gelangen die Steueröffnungen 18 mit den Strömungsöffnungen 16 in eine größere Überdeckung, sodass ein vergrößerter erster Strömungsquerschnitt A1 gebildet wird. Durch die jedoch weiterhin geringe Drehzahl der Brennkraftmaschine ist der Unterdruck auf der Abströmseite 12 in strömungsmäßiger Verbindung mit dem Ansaugtrakt der Brennkraftmaschine weiterhin geringer, sodass das zweite Steuerorgan 14 nicht weiter auf den Grundkörper 15 unter gleichzeitiger Komprimierung des zweiten Federelements 22 aufgezogen wird. Folglich bleiben die Strömungsöffnung 16 und die Steueröffnung 19 in im Wesentlichen in Überdeckung, sodass sich ein maximaler Strömungsquerschnitt durch die Öffnungen 16, 18 und 19 ergibt. Durch den größeren Volumenstrom im Gasstrom 10, bedingt durch die größere Menge an entstehendem Blow-By-Gas, kann die Ölabscheidung am Abscheidekörper 17 die volle Wirkung entfalten, aufgrund des geringen Unterdrucks auf der Ansaugseite der Brennkraftmaschine ist jedoch keine Begrenzung des Unterdrucks im Kurbelgehäuse notwendig, sodass der volle Querschnitt gebildet werden kann, der durch die Öffnungen 16, 18 und 19 bereitgestellt werden kann.

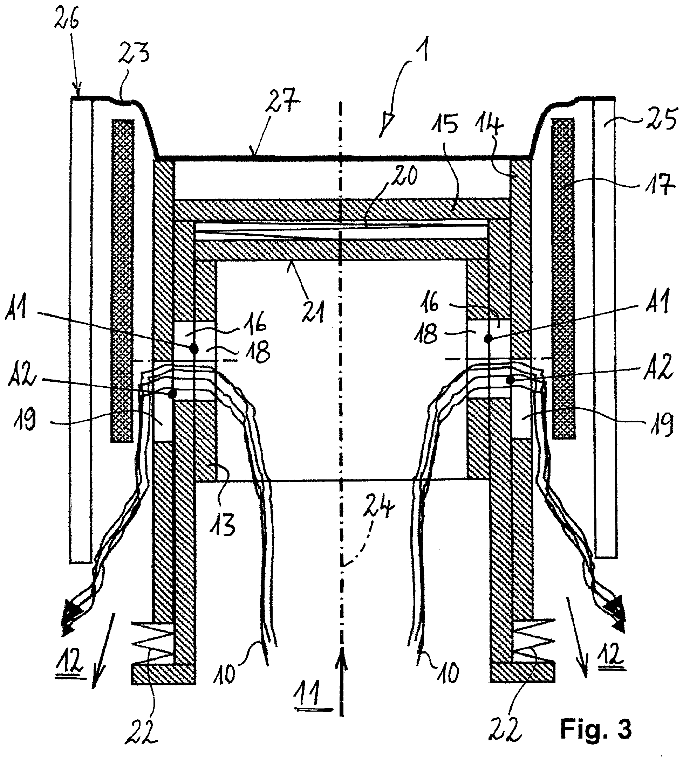

Figur 3 zeigt schließlich einen weiteren Betriebszustand der Ölabscheideeinrichtung 1 in Abhängigkeit von einem Betriebspunkt der Brennkraftmaschine, der durch ein hohes Drehmoment und damit einer großen Menge an entstehendem Blow-By-Gas, verbunden mit einer hohen Drehzahl, gekennzeichnet ist. Die hohe Drehzahl bewirkt dabei einen starken Unterdruck im Ansaugtrakt, sodass das zweite Steuerorgan 14 weiter auf den Grundkörper 15 aufgezogen wird, und sodass sich der zweite Strömungsquerschnitt A2 durch die nur teilweise Überdeckung der Strömungsöffnung 16 mit der Steueröffnung 19 verkleinert wird. Dadurch entsteht ein Drosseleffekt, sodass der Unterdruck im Kurbelgehäuse durch den starken Unterdruck im Ansaugtrakt nicht verstärkt wird, zugleich entsteht ein gewünschter Anstieg des Strömungswiderstandes, um einen Düseneffekt des Gasstroms 10 gegen die Innenseite des Abscheidekörpers 17 zu bewirken.

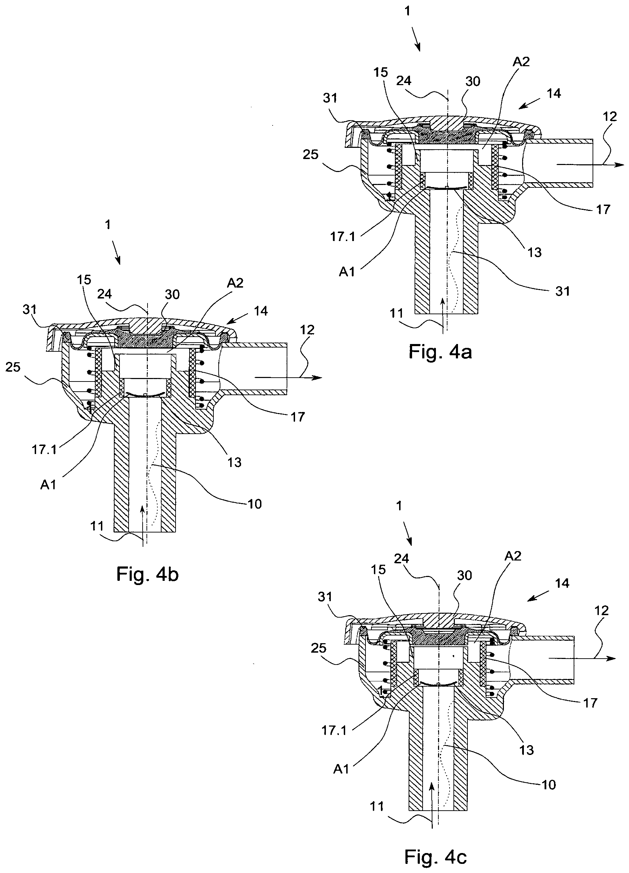

Die Figuren 4a bis 4c zeigen jeweils eine Querschnittsansicht einer Ausführungsform einer Ölabscheideeinrichtung 1, bei welcher anstelle eines einzelnen Abscheidekörpers 17 zwei Abscheidekörper 17 und 17.1 angeordnet sind. Der erste Abscheidekörper 17 ist vorteilhaft, wie oben bereits aufgezeigt, ein Vlies bzw. weist insbesondere ein Vliesmaterial auf, welches zur Abscheidung eines flüssigen Mediums, wie beispielsweise Öl, aus dem Volumenstrom 10 bzw. Gasstrom 10 dient. Der erste Abscheidekörper 17 erstreckt sich in Umfangsrichtung um den Grundkörper 15, insbesondere in einem Bereich des zweiten Strömungsquerschnittes A2, und trennt die Anströmseite 11 von der Abströmseite 12 der Ölabscheideeinrichtung 1. Der zweite Strömungsquerschnitt A2 erstreckt sich vorteilhaft zwischen dem Grundkörper 15 und dem Druckregelventilsegment 30, welches eine Druckregelventilmembran 31 zur Regelung des Druckes im Motorraum aufweist. Ein zweiter Abscheidekörper 17.1 ist im Bereich des ersten Steuerorgans 13, insbesondere im Bereich eines ersten Strömungsquerschnittes A1 angeordnet und ist vergleichbar zum ersten Abscheidekörper 17 ebenfalls vorteilhaft ein Vlies bzw. weist vorteilhaft ein Vliesmaterial auf. Vorteilhaft umgibt es das erste Steuerorgan 13, welches beispielsweise ein flexibles Plättchen ist, umfänglich. Der zweite Abscheidekörper 17.1 weist einen geringeren Durchmesser auf, als der erste Abscheidekörper 17, insbesondere, wenn beide Abscheidekörper 17 und 17.1 rohrförmig ausgestaltet sind. Dabei weisen beide Abscheidekörper 17, 17.1 jeweils eine innere Oberfläche bzw. eine Innenseite auf, auf welche beim Abscheideprozess vorteilhaft ein Gasstrom 10 auftrifft und in Richtung der Abströmseite 12 umgelenkt wird. Die in dem Gasstrom 10 bzw. Volumenstrom 10 enthaltenen Öltröpfchen bleiben bei diesem Umlenkprozess des Gasstromes 10 an dem Abscheidekörper 17 bzw. 17.1 haften.

In Berücksichtigung der Leistung bzw. der Last einer Brennkraftmaschine eines Kraftfahrzeuges, bei welchem die aufgezeigte Ölabscheideeinrichtung 1 Verwendung findet, wird eine größere oder geringere Menge an Gasstrom 10 durch die Ölabscheideeinrichtung 1 transportiert. Infolgedessen verändern sich auch die Strömungsquerschnitte A1 und A2, um ein Hindurchfließen lassen des Volumenstroms 10 durch die Ölabscheideeinrichtung 1 vorteilhaft ohne, jedoch zumindest lediglich unter Auftreten eines sehr geringen Druckverlustes über das System, das bedeutet im Bereich des Kurbelgehäuses genauso wie im Bereich des Ansaugtraktes der Brennkraftmaschine zu ermöglichen.

Bei einer niedrigen Last und/oder einer geringen Drehzahl der Brennkraftmaschine von beispielsweise 1500 1/min, ist demzufolge der von der Anströmseite 11 in die Ölabscheideeinrichtung 1 einströmende Gasstrom 10 ebenfalls gering und weist beispielsweise einen Wert von ca. 25 l/min auf. Der Unterdruck vor dem Verdichter bzw. Turbolader (hier nicht gezeigt) beträgt hierbei beispielsweise ca. 8 mbar. Dieser Zustand führt, wie in der Fig. 4a gezeigt, zu einer maximalen Öffnung des Querschnittes A2 und einer minimalen Deformierung des Steuerorgans 13. Folglich ist auch der durch das erste Steuerorgan 13 freigegebene erste Strömungsquerschnitt A1 gering und weist beispielsweise ein Größe von 30 mm² auf. Das erste Steuerorgan 13 ist ein flexibles Element, welches sich der Menge der Gasströmung 10 anpasst und folglich die Möglichkeit bietet einen Strömungsquerschnitt A1 unterschiedlicher Dimension freizugeben.

Demzufolge ist in der Figur 4b eine Querschnittsansicht der in der Figur 4a gezeigten Ausführungsform einer Ölabscheideeinrichtung in einem zweiten und in der Figur 4c in einem dritten Zustand gezeigt. Wie in der Figur 4b gezeigt, deformiert bzw. verbiegt sich das erste Steuerorgan 13 zunehmend, basierend auf einem im Vergleich zu dem in Figur 4a gezeigten Zustand, erhöhten Gasstrom 10. Dieser erhöhte Gasstrom 10 bzw. Volumenstrom 10 weist beispielsweise ca. einen Wert von 50 l/min auf und tritt beispielsweise während eines Betriebes, insbesondere während eines Vollastbetriebspunkt der Brennkraftmaschine bei einer Drehzahl von ca. 2000 1/min auf. Der Unterdruck vor dem Verdichter beträgt in diesem Zustand zum Beispiel ca. 10 mbar. Die Deformierung des ersten Steuerorgans 13 ist insbesondere aufgrund des hohen Volumenstroms 10 und des im Vergleich zu dem in der Fig. 4a gezeigten Zustandes, nämlich aufgrund des höheren Druckes auf der Anströmseite 11 maximal, sodass ein erster Strömungsquerschnitt A1 mit einer Öffnung ausgebildet wird, welcher vorteilhaft eine Größe von ca. 50 mm² aufweist. Der zweite Strömungsquerschnitt A2 ist vorteilhaft unverändert und besonders vorteilhaft maximal.

Wie in den Figuren 4a und 4b gezeigt, fließt der Gasstrom 10 durch den ersten Strömungsquerschnitt A1, welcher von dem ersten Steuerorgan 13 variiert wird und trifft auf den zweiten Abscheidekörper 17.1, wird von diesem umgelenkt und fließt aus dem Bereich des Grundkörpers 15 hinaus in Richtung der Druckregelventilmenbran 31 des Druckregelventilsegmentes 30. Das Druckregelventilsegment 31 gibt einen zweiten Strömungsquerschnitt A2 frei, durch welchen der Gasstrom 10 in Richtung des ersten Abscheidekörpers 17 geleitet wird, an dessen Innenseite der nun zumindest teilweise von den Öltröpfchen befreite Gasstrom 10 umgelenkt wird, um in Richtung der Abströmseite 12 aus der Ölabscheideeinrichtung 1 zu fließen. Wie in den Figuren 4a und 4b gezeigt, findet insbesondere bei einem Auftreten von Lastpunkten aufweisend einen niedrigen Unterdruck auf der Abströmseite 12 keine Regelung des Druckregelventilsegmentes 30 statt, sodass der dargestellte zweite Strömungsquerschnitt vorteilhaft unverändert bleibt.

Wird die Last der Brennkraftmaschine, insbesondere der Betriebslastpunkt und/oder die Drehzahl auf beispielsweise ca. 4000 1/min weiter erhöht, wird auch der Gasstrom 10 auf beispielsweise ca. 50 l/min gesteigert, wobei während diesem Belastungszustand der Unterdruck vor dem Verdichter beispielsweise ca. 50 mbar beträgt. In diesem Fall regelt das Druckregelventilsegment 30, welches vorteilhaft als zweites Steuerorgan 14 tätig ist, den Druckausgleich, indem es sich in Richtung des ersten Steuerorganes 13 bewegt und folglich den zweiten Strömungsquerschnitt A2 verringert. Dies ist insbesondere in der Fig. 4c gezeigt.

Im Ergebnis wird eine Ölabscheideeinrichtung 1 mit einer doppelt wirkenden Schaltcharakteristik geschaffen, und für jeden Betriebspunkt der Brennkraftmaschine kann der Abscheide- Wirkungsquerschnitt zur Erhöhung der Abscheideleistung in der Ölabscheideeinrichtung optimiert werden. Insbesondere kann verhindert werden, dass bei starkem Unterdruck im Ansaugtrakt der Unterdruck im Kurbelgehäuse zu stark ansteigt, zugleich kann jedoch bei einer großen Menge an entstehendem Blow-By-Gas trotz geringer Drehzahl eine hohe Abscheideleistung umgesetzt werden.

### Bezugszeichenliste

- 1: Ölabscheideeinrichtung

- 10: Gasstrom / Volumenstrom
- 11: Anströmseite
- 12: Abströmseite
- 13: erstes Steuerorgan
- 14: zweites Steuerorgan
- 15: Grundkörper
- 16: Strömungsöffnung
- 17: (erster) Abscheidekörper
- 17.1: zweiter Abscheidekörper
- 18: (erste)Steueröffnung
- 19: (zweite) Steueröffnung
- 20: erstes Federelement
- 21: Wirkfläche
- 22: zweites Federelement
- 23: Membran
- 24: Mittelachse
- 25: Gehäuse
- 26: Endseite
- 27: Außenseite

- 30: Druckregelventilsegment
- 31: Druckregelventilmembran

- A1: erster Strömungsquerschnitt
- A2: zweiter Strömungsquerschnitt

## Patentansprüche

1. Ölabscheideeinrichtung (1) zur Abscheidung von Öl aus einem Gasstrom (10) zur Entlüftung eines Kurbelgehäuses einer Brennkraftmaschine, mit einer Anströmseite (11), die mit dem Kurbelgehäuse der Brennkraftmaschine strömungsmäßig in Verbindung bringbar ist und aus der die Ölabscheideeinrichtung (1) mit dem mit Öl beladenen Gasstrom (10) anströmbar ist und mit einer Abströmseite (12), die mit dem Ansaugtrakt der Brennkraftmaschine strömungsmäßig in Verbindung bringbar ist und in den der von Öl im Wesentlichen gereinigte Gasstrom (10) aus der Ölabscheideeinrichtung (1) abströmbar ist, wobei
- ein erstes Steuerorgan (13) vorgesehen ist, mit dem ein erster Strömungsquerschnitt (A1) des Gasstromes (10) durch die Ölabscheideeinrichtung (1) veränderbar ist und das durch einen Gasdruck im Kurbelgehäuse steuerbar ist und dass
- ein zweites Steuerorgan (14) vorgesehen ist, mit dem ein dem ersten Strömungsquerschnitt (A1) nachgelagerter zweiter Strömungsquerschnitt (A2) des Gasstromes (10) durch die Ölabscheideeinrichtung (1) veränderbar ist und das durch einen Unterdruck im Ansaugtrakt steuerbar ist, wobei
ein Grundkörper (15) vorgesehen ist, in dem wenigstens eine Strömungsöffnung (16) zur Hindurchleitung des Gasstromes (10) eingebracht ist,
- das zweite Steuerorgan (14) gegenüberliegend zum ersten Steuerorgan (13) angrenzend an den Grundkörper (15) angeordnet ist, sowie
ein Abscheidekörper (17) vorgesehen und so angeordnet ist, dass dieser mit dem durch die Strömungsöffnungen (16) gelangten Gasstrom (10) anströmbar ist, **dadurch gekennzeichnet, dass** das zweite Steuerorgan (14) Steueröffnungen (19) aufweist, durch die der Gasstrom (10) hindurchführbar ist, wobei das zweite Steuerorgan (14) relativ zum Grundkörper (15) bewegbar ist, sodass zur Änderung des zweiten Strömungsquerschnittes (A2) die Überdeckung der Steueröffnungen (19) mit den Strömungsöffnungen (16) veränderbar ist.

2. Ölabscheideeinrichtung (1) nach Anspruch 1, **dadurch gekennzeichnet, dass** das erste Steuerorgan (13) angrenzend an den Grundkörper (15) angeordnet ist und Steueröffnungen (18) aufweist, durch die der Gasstrom (10) hindurchführbar ist, wobei das erste Steuerorgan (13) relativ zum Grundkörper (15) bewegbar ist, sodass zur Änderung des ersten Strömungsquerschnittes (A1) die Überdeckung der Steueröffnungen (18) mit den Strömungsöffnungen (16) veränderbar ist.

3. Ölabscheideeinrichtung (1) nach einem der vorgenannten Ansprüche, **dadurch gekennzeichnet, dass** ein erstes Federelement (20) vorgesehen ist, durch das das erste Steuerorgan (13) vorgespannt ist, wobei das erste Steuerorgan (13) eine Wirkfläche (21) aufweist, die mit dem Gasdruck im Kurbelgehäuse beaufschlagbar ist, wobei mit einem Gasdruck auf die Wirkfläche (21) eine Kraft gegen die Vorspannkraft des ersten Federelementes (20) erzeugbar ist.

4. Ölabscheideeinrichtung (1) nach einem der vorgenannten Ansprüche, **dadurch gekennzeichnet, dass** ein zweites Federelement (22) vorgesehen ist, durch das das zweite Steuerorgan (14) vorgespannt ist, wobei das zweite Steuerorgan (14) mit einer Membran (23) wirkverbunden ist, die mit dem Unterdruck im Ansaugtrakt zusammenwirkt, wobei mit einem Unterdruck an der Membran (23) eine Kraft gegen die Vorspannkraft des zweiten Federelementes (22) erzeugbar ist.

5. Ölabscheideeinrichtung (1) nach einem der vorgenannten Ansprüche, **dadurch gekennzeichnet, dass** der Grundkörper (15), das erste Steuerorgan (13), das zweite Steuerorgan (14) und/oder der Abscheidekörper (17) hohlzylinderförmig ausgebildet sind und sich ineinander gefügt um eine gemeinsame Mittelachse (24) erstrecken.

6. Ölabscheideeinrichtung (1) nach einem der vorgenannten Ansprüche, **dadurch gekennzeichnet, dass** das erste Steuerorgan (13) gegen die Innenwand des Grundkörpers (15) entlang der Mittelachse (24) geführt ist und/oder dass das zweite Steuerorgan (14) auf der Außenumfangsfläche des Grundkörpers (15) entlang der Mittelachse (24) geführt ist.

7. Ölabscheideeinrichtung (1) nach einem der Ansprüche 4 bis 6, **dadurch gekennzeichnet, dass** ein vorzugsweise hohlzylinderförmig ausgebildetes Gehäuse (25) vorgesehen ist, in dem der Grundkörper (15), das erste Steuerorgan (13), das zweite Steuerorgan (14) und/oder der Abscheidekörper (17) aufgenommen sind, insbesondere wobei an einer Endseite (26) des Gehäuses (25) die Membran (23) dichtend angeordnet ist.

8. Ölabscheideeinrichtung (1) nach einem der vorgenannten Ansprüche, **dadurch gekennzeichnet, dass** eine Außenseite (27) der Membran (23) mit Umgebungsluftdruck beaufschlagbar ist, wobei die Außenseite (27) der Seite der Membran (23) gegenüberliegt, die mit dem Unterdruck im Ansaugtrakt wirkverbindbar ist.

## Claims

1. Oil separation device (1) for separating oil from a gas stream (10) for ventilating a crankcase of a combustion engine, said device having an inflow side (11), which can be fluidically connected to the crankcase of the combustion engine and from which the gas stream (10) laden with oil can flow to the oil separation device (1), and having an outflow side (12), which can be connected fluidically to the intake tract of the combustion engine and into which the gas stream (10) substantially purged of oil can flow from the oil separation device (1),wherein
- a first control member (13) is provided, by means of which a first flow cross section (A1) of the gas stream (10) passing through the oil separation device (1) can be varied and which can be controlled by a gas pressure in the crankcase, and in that
- a second control member (14) is provided, by means of which a second flow cross section (A2)
- situated downstream of the first flow cross section (A1) - of the gas stream (10) passing through the oil separation device (1) can be varied and which can be controlled by means of a vacuum in the intake tract, wherein
a main body (15) is provided, into which at least one flow opening (16) for passing through the gas stream (10) is introduced,
- the second control member (14) is arranged opposite the first control member (13) and adjoining the main body (15), and also
a separating body (17) is provided and arranged in such a way that the gas stream (10) which has passed through the flow openings (16) can flow against it, **characterized in that** the second control member (14) has control openings (19), through which the gas stream (10) can be passed, wherein the second control member (14) can be moved relative to the main body (15), allowing the overlap between the control openings (19) and the flow openings (16) to be varied in order to change the second flow cross section (A2).

2. Oil separation device (1) according to Claim 1, **characterized in that** the first control member (13) is arranged adjoining the main body (15) and has control openings (18), through which the gas stream (10) can be passed, wherein the first control member (13) can be moved relative to the main body (15), allowing the overlap between the control openings (18) and the flow openings (16) to be varied in order to change the first flow cross section (A1).

3. Oil separation device (1) according to one of the preceding claims, **characterized in that** a first spring element (20) is provided, by means of which the first control member (13) is preloaded, wherein the first control member (13) has an effective surface (21), which can be subjected to the gas pressure in the crankcase, wherein a force counter to the preloading force of the first spring element (20) can be produced by means of a gas pressure on the effective surface (21).

4. Oil separation device (1) according to one of the preceding claims, **characterized in that** a second spring element (22) is provided, by means of which the second control member (14) is preloaded, wherein the second control member (14) is operatively connected to a diaphragm (23), which interacts with the vacuum in the intake tract, wherein a force counter to the preloading force of the second spring element (22) can be produced by means of a vacuum acting on the diaphragm (23).

5. Oil separation device (1) according to one of the preceding claims, **characterized in that** the main body (15), the first control member (13), the second control member (14) and/or the separating body (17) are of hollow-cylindrical design, are fitted into one another and extend around a common center line (24).

6. Oil separation device (1) according to one of the preceding claims, **characterized in that** the first control member (13) is guided along the center line (24) against the inner wall of the main body (15), and/or **in that** the second control member (14) is guided along the center line (24) on the outer circumferential surface of the main body (15).

7. Oil separation device (1) according to one of Claims 4 to 6, **characterized in that** a housing (25), preferably of hollow-cylindrical design, is provided, in which the main body (15), the first control member (13), the second control member (14) and/or the separating body (17) are accommodated, in particular wherein the diaphragm (23) is arranged sealingly on an end side (26) of the housing (25).

8. Oil separation device (1) according to one of the preceding claims, **characterized in that** an outer side (27) of the diaphragm (23) can be subjected to ambient air pressure, wherein the outer side (27) lies opposite the side of the diaphragm (23) which can be connected operatively to the vacuum in the intake tract.

## Revendications

1. Dispositif de séparation d'huile (1) servant à la séparation d'huile à partir d'un flux de gaz (10) pour le dégazage d'un carter de vilebrequin d'un moteur à combustion interne, comprenant un côté d'entrée d'écoulement (11) qui peut être mis en communication fluidique avec le carter de vilebrequin du moteur à combustion interne et à partir duquel le flux de gaz (10) chargé d'huile peut s'écouler dans le dispositif de séparation d'huile (1), et un côté de sortie d'écoulement (12) qui peut être mis en communication fluidique avec le système d'admission du moteur à combustion interne et dans lequel le flux de gaz (10) sensiblement purifié de l'huile peut s'écouler hors du dispositif de séparation d'huile (1),
- un premier organe de commande (13) étant prévu, à l'aide duquel une première section transversale d'écoulement (A1) du flux de gaz (10) à travers le dispositif de séparation d'huile (1) peut être modifiée, et lequel peut être commandé par une pression de gaz dans le carter de vilebrequin, et
- un deuxième organe de commande (14) étant prévu, à l'aide duquel une deuxième section transversale d'écoulement (A2), placée en aval de la première section transversale d'écoulement (A1), du flux de gaz (10) à travers le dispositif de séparation d'huile (1) peut être modifiée, et lequel peut être commandé par une dépression dans le système d'admission,
un corps de base (15) étant prévu, dans lequel au moins une ouverture d'écoulement (16) pour le passage du flux de gaz (10) est ménagée,
le deuxième organe de commande (14) étant disposé en regard du premier organe de commande (13), de manière adjacente au corps de base (15), et
un corps de séparation (17) étant prévu et disposé de telle sorte que le flux de gaz (10) parvenant à travers les ouvertures d'écoulement (16) puisse s'écouler sur le corps de séparation, **caractérisé en ce que** le deuxième organe de commande (14) comprend des ouvertures de commande (19) à travers lesquelles le flux de gaz (10) peut être guidé, le deuxième organe de commande (14) étant déplaçable par rapport au corps de base (15), de telle sorte que, pour modifier la deuxième section transversale d'écoulement (A2), le chevauchement des ouvertures de commande (19) avec les ouvertures d'écoulement (16) peut être modifié.

2. Dispositif de séparation d'huile (1) selon la revendication 1, **caractérisé en ce que** le premier organe de commande (13) est disposé de manière adjacente au corps de base (15) et comprend des ouvertures de commande (18) à travers lesquelles le flux de gaz (10) peut être guidé, le premier organe de commande (13) étant déplaçable par rapport au corps de base (15), de telle sorte que, pour modifier la première section transversale d'écoulement (A1), le chevauchement des ouvertures de commande (18) avec les ouvertures d'écoulement (16) peut être modifié.

3. Dispositif de séparation d'huile (1) selon l'une quelconque des revendications précédentes, **caractérisé en ce qu'**un premier élément ressort (20) est prévu, au moyen duquel le premier organe de commande (13) est précontraint, le premier organe de commande (13) comprenant une surface active (21) qui peut être soumise à la pression de gaz dans le carter de vilebrequin, une force antagoniste à la force de précontrainte du premier élément ressort (20) pouvant être produite par une pression de gaz sur la surface active (21).

4. Dispositif de séparation d'huile (1) selon l'une quelconque des revendications précédentes, **caractérisé en ce qu'**un deuxième élément ressort (22) est prévu, au moyen duquel le deuxième organe de commande (14) est précontraint, le deuxième organe de commande (14) étant relié fonctionnellement à une membrane (23) qui coopère avec la dépression dans le système d'admission, une force antagoniste à la force de précontrainte du deuxième élément ressort (22) pouvant être produite par une dépression agissant sur la membrane (23).

5. Dispositif de séparation d'huile (1) selon l'une quelconque des revendications précédentes, **caractérisé en ce que** le corps de base (15), le premier organe de commande (13), le deuxième organe de commande (14) et/ou le corps de séparation (17) sont de forme cylindrique creuse et s'étendent autour d'un axe médian commun (24) de manière emboîtée les uns dans les autres.

6. Dispositif de séparation d'huile (1) selon l'une quelconque des revendications précédentes, **caractérisé en ce que** le premier organe de commande (13) est guidé contre la paroi intérieure du corps de base (15) le long de l'axe médian (24) et/ou **en ce que** le deuxième organe de commande (14) est guidé sur la surface périphérique extérieure du corps de base (15) le long de l'axe médian (24).

7. Dispositif de séparation d'huile (1) selon l'une quelconque des revendications 4 à 6, **caractérisé en ce qu'**un boîtier (25) de préférence de forme cylindrique creuse est prévu, dans lequel sont logés le corps de base (15), le premier organe de commande (13), le deuxième organe de commande (14) et/ou le corps de séparation (17), la membrane (23) étant en particulier disposée de manière étanche contre un côté d'extrémité (26) du boîtier (25) .

8. Dispositif de séparation d'huile (1) selon l'une quelconque des revendications précédentes, **caractérisé en ce qu'**un côté extérieur (27) de la membrane (23) peut être soumis à la pression de l'air ambiant, le côté extérieur (27) étant opposé au côté de la membrane (23) qui peut être relié fonctionnellement à la dépression dans le système d'admission.
